# EUROPEAN PATENT APPLICATION

(11) **EP 0 813 186 A2**
(43) Date of publication of application: **17.12.1997**
(21) Application number: 96305907.6
(22) Date of filing: 12.08.1996
(51) Int. Cl.: G10L 9/20

(54) **Animal's intention translational method**

(30) Priority: 14.06.1996 JP 175852/96
(71) Applicant: Yamamoto, Masaomi, Yokohama-shi, Kanagawa-ken (JP)
(72) Inventor: Yamamoto, Masaomi, Yokohama-shi, Kanagawa-ken (JP)
(74) Representative: Waldren, Robin Michael

(57) **Abstract**

This invention is an animal's intention translational method. This method is, first of all, to receive either of the two or both of informational signals about a voice of the animal such as a baby, pet, and domestic animal that they utter and animal's actions. After that, it compares with the received informational signal and the data which are analysed by the animal behavioralism beforehand, and it selects the data. In addition, the received informational signal is indicated what the animal appeals in words or letters that people are able to understand. As for the above mentioned invention, people are able to communication correctly with the animal.

## Description

### BACKGROUND OF THE INVENTION

This invention relates to the animal's intention translational method that people are able to understand correctly the appeals for the animal such as a baby, pet, and domestic animal as well as the professionals about the animal.

The former communication between the animal such as a baby, pet, and domestic animal and a human being was performed in only intuition on the side of a human being.

In former communication by the only intuition on the side of a human being, only people who understood sufficiently the action of the animal such as a baby, pet, and domestic animal promote the accurate communication. On the other hand, people who can not understand sufficiently the action of the animal cannot promote the accurate communication, then they ill-treated unconsciously the animal such as a baby, pet, and a domestic animal, or they suffered from neurosis because of not as their pleases.

### SUMMARY OF THE INVENTION

In view of the foregoing, it is an object of the present invention to provide the animal's intention translational method which receives either of the two or both of informational signals as the voice that the animal such as a baby, pet, and domestic animal utters or the action of the animal.

It is another object of the present invention to provide the animal's intention translational method which is able to compare with the informational signal and the data which was analysed by animal behavioralism beforehand, and it is able to select an informational signal.

It is another object of the present invention to provide the animal's intention translational method which is able to indicate the selected informational signals in a word that people are able to understand or a display.

It is another object of the present invention to provide the animal's intention translational method that people are able to understand the accurate appeals for the animal such as a baby, pet, and domestic animal.

The above and further objects and novel features of the invention will more fully appear from the following detailed description when the same is read in connection with accompanying drawings. It is to be expressly understood, however, that the drawing is for the purpose of illustration only and is not intended as a definition of the limits of the invention.

### BRIEF DESCRIPTION OF THE DRAWINGS

Fig. 1 is a process drawing showing the first embodiment of the present invention;
Fig. 2 is a block diagram showing the first embodiment of the present invention;
Fig. 3 is an explanation drawing about a indicational equipment showing the first embodiment of the present invention;
Fig. 4 is a process drawing showing of the second embodiment of the present invention;
Fig. 5 is a block diagram showing the second embodiment of the present invention;
Fig. 6 is a process drawing showing the third embodiment of the present invention; and
Fig. 7 is a block diagram showing the third embodiment of the present invention.

### DESCRIPTION OF THE PREFERRED EMBODIMENT

Preferred embodiments of the present invention will be description in more details referring to the accompanying drawings.

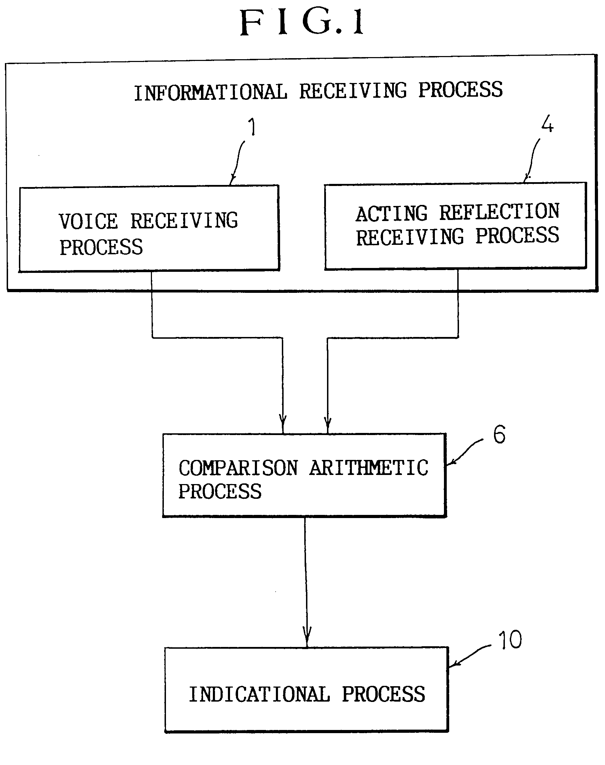

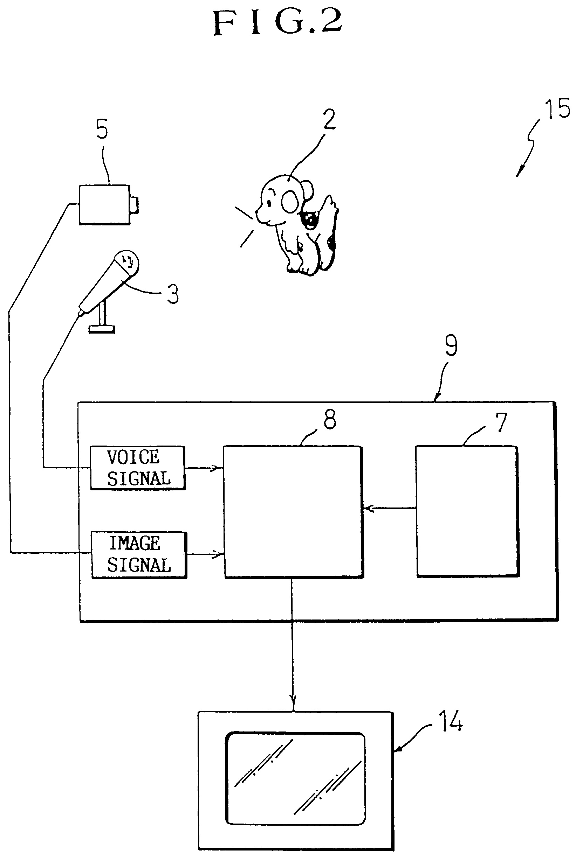

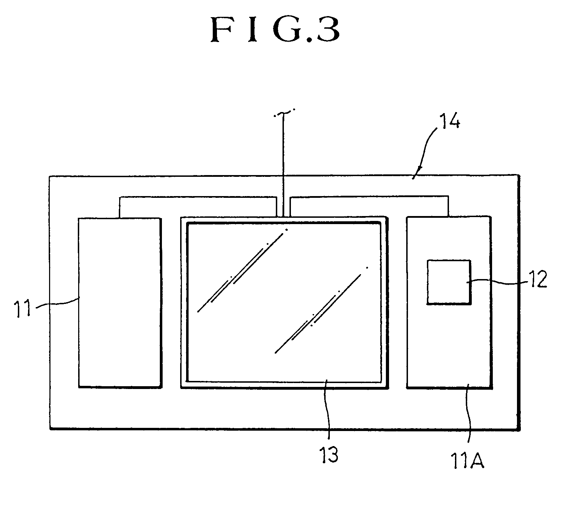

Figs. 1 to 3 illustrate the first embodiment of the present invention. A voice receiving process 1 including an informational receiving process receives a voice that a dog as a pet 2 utteres, and it changes from a voice to a voice signal. This voice receiving process 1 is performed to use a microphone for gathering sounds as a voice receiving equipment 3. This voice receiving equipment 3 receives the voice of a dog as a pet 2 without surrounding noise, and it outputs after it changes from a voice to a voice signal.

An acting reflection receiving process 4 including an informational receiving process receives the action of a dog as a pet 2 as a reflection, and it changes from an reflection to an image signal. This acting reflection receiving process 4 is performed to use a video camera as an acting reflection receiving equipment 5. In this case, a microphone with a video camera is used as a voice receiving equipment 3. Furthermore, a video camera may be used it which has the function of nightvision system or voice and videotape recording.

In the comparison arithmetic process 6, the first step is to compare with both of an image signal by the acting reflection receiving process 4 of the informational receiving process and an voice signal by a voice receiving process 1 of it and the data for voice and action 7 which are analysed by the animal behavioralism beforehand using a comparison equipment 8. Next step is to select either of these data. In this comparison arithmetic process 6, a comparison arithmetic equipement 9 is used. The data for a voice and action 7 which are input into a comparison arithmetic equipment 9 can be selected what kind of the expression of emotion, will or desire a dog as a pet 2 has it owing to a voice of a dog as a pet 2 that the professionals analysed, for example, an interval, tone, musical scale, intonation, volum, intermittence, or repetitive frequency, and owing to image signal, for example, the sorts of a dog as a pet 2, condition, environment, or the action of rump and tail, eares, eyes, mouth, and legs.

An indicational process 10 indicates the data which were selected by the comparison arithmetic process 6 in a voice that people are able to understand or in words or pictures using a display. In this indicational process 10, an indicational equipment 14 is used. The indicational equipment 14 is used to either of the devices such as a loudspeaker 11, a loudspeaker 11A or a display 13 or combine several devices. The loudspeaker 11 indicates by a voice as an indicational equipment or combine several devices. The loudspeaker 11A is formed a translational equipment 12 which is able to translate selectively to the language in several countries or the language in a specific country. The display 13 is a liquid crytal or a picture tube to indicate letters and pictures.

Moreover, this indicational process 10 may be able to indicate in a sole or a row with the indications of voice, letter, or drawing as the corresponding way to a pet. These indications are changed from the expression of emotion, will, or desire for pet which was selected by the comparison arithmetic process 6.

In the above-mentioned intention translational equipment of a dog as a pet 15, the voice and action for a dog as a pet are received by a voice receiving equipment 3 and acting reflection receiving equipment 5. Furthermore, the received voice and action are indicated the expression of emotion, will, or desire which was analysed by the professionals on an indicational equipment 14 through a comparison arithmetic equipment 9. Then, people are able to perform the most suitable corresponding to a dog as a pet and promote the best suited communication with a dog as a pet.

### DIFFERENT PREFERRED EMBODIMENTS OF THE INVENTIOM

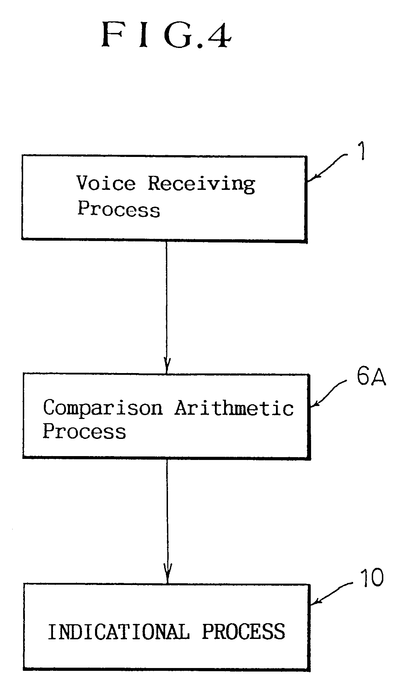

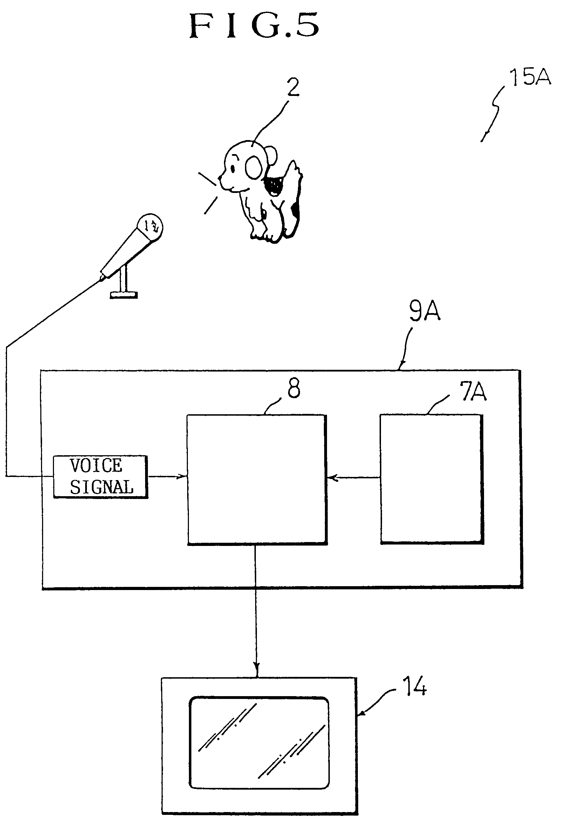

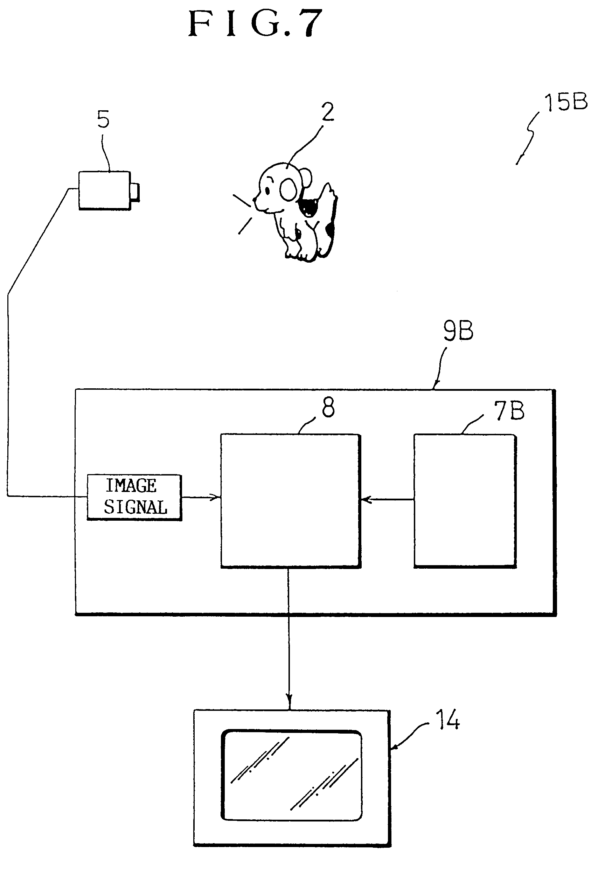

Other embodiments of the present invention will now be described referring to Figs. 4 to 7. Through the drawings of the embodiments, like components are denoted by like numerals as of the first embodiment and will be explained in more details.

Figs. 4 to 5 illustrate the second embodiment of the present invention which is distinguished from the first embodiment by the fact that a comparison arithmetic process 6A performs using a comparison arithmetic equipment 9A. This comparison arithmetic equipment 9A selects either of the two of the compared data, that is, one is a voice signal from the voice receiving equipment 3 of voice receiving process 1, another is voice data 7A which is analysed by the animal behavioralism beforehand. The intention translational equipment of a dog as a pet 15A that an informational receiving process is performing only a voice receiving process 1 provides the same effects that people are able to understand what kind of the expression of emotion, will or desire the voice of a dog as a pet expresses.

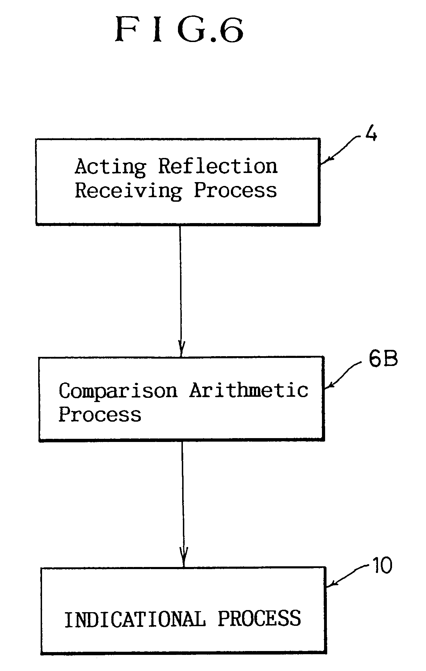

Figs. 6 to 7 illustrate the third embodiment of the present invention which is distinguished from the first embodiment by the fact that a comparison arithmetic process 6B performs using comparison arithmetic equipment 9B. This comparison arithmetic equipment 9B selects either of the two of the compared data, that is, one is an image signal by an acting reflecting receiving equipment 5 of the acting reflecting receiving process 4, another is the data for action 7B which were analysed by the animal behavioralism beforehand. The intention translational equipment of a dog as a pet 15B that an informational receiving process is performing only an acting reflection receiving process 4 provides the same effects that people are able to understand what kind of the expression of emotion, will or desire the voice of a dog as a pet expresses.

Furthermore, each embodiment of the present invention explained that people can understand what a dog as a pet is expressing, however, these embodiments are not intended the limits of this invention. The data for voice and action of the animal such as a baby, all sorts of pets and domestic animal is used as the data of a comparison arithmetic equipment 9, 9A, or 9B. Then, it provides the same effects that people are able to understand what kind of the expression of emotion, will, or desire the voice of dog as a pet expresses.

### ADVANTAGES OF THE INVENTION

As set forth above, the advantages of the present invention are as follows:
(1) The present invention consists of an informational receiving process, a comparison arithmetic process, and an indicational process. The informational receiving process receives either of the two or both of the informational signals of the voice that the animal such as a baby, pet, and domestic animal utter or their actions, and it changes from its voice to a voice signal. The comparison arithmetic process compares with an informational signal by the informational receiving process and the data which were analysed by the animal behavioralism beforehand, and it selects either of the data. Moreoever, an indicational process indicates the data which were selected in the comparison arithmetic process in a voice, or letteres and pictures using a display. Because the present invention consists of these elements, people are able to understand what kind of the expression for the animal such as a baby, pet, and domestic animal has it owing to a voice that people are able to understand or a display as well as the professionals judge of the expression of the animal from animal's voice and action, even if people cannot understand the expression of the animal.
   Therefore, people are able to promote the accurate communication with animals because they are able to know correctly the expression for the animal. In addition, they can be prevented certainly to ill-treat unconsciously the animal such as a baby, pet, and domestic animal and to suffer from neurosis because of not as their pleases.
(2) As discussed above, people are able to by playful with the animal such as a baby, pet, and domestic animal and to promote well the communication with the animal because they are able to understand the expression of the animal such as a baby, pet, and domestic animal as well as the professionals.
(3) As discussed above, people are able to know soon the expression of the animal such as a baby, pet, and domestic animal and they can be performed the fittest corresponding soon because they are able to know the expression of the animal by a voice that people understand or a display by either of the two or both of a voice and action of the animal such as a baby, pet, and domestic animal.

### ADDITIONAL REMARK

1. An animal's intention translational equipment comprising: a voice receiving equipment which receives a voice that the animal such as a baby, pet, and domestic animal utter and changes from their voice to a voice signal; an acting reflection receiving equipment which receives the action of animals which utter a voice received by said voice receiving process as an reflection and changes from the reflection of animal's action to an image signal; a comparison arithmetic equipment which compares with both of a voice signal which was input by said voice receiving process and an image signal which was input by said acting reflection receiving process and the data about voice and action which were analysed by the animal behavioralism beforehand, and it outputs the selected data; and an indicational equipment which indicates an output signal which were selected said comparison arithmetic process in a word or a display.
2. An animal's intention translational equipment comprising: a voice receiving equipment which receives a voice that the animal such as a baby, pet, and domestic animal utteres and it changes from their voice to a voice signal; a comparison arithmetic process which compares with both of the voice signal which was input by said voice receiving process and the data for a voice which was analysed by the animal behavioralism beforehand, and it outputs the selected data; and an indicational process which indicates the data which were selected by said comparison arithmetic process in a word or a display.
3. An animal's translational translational equipment comprising: an acting reflection receiving process which receives the action of the animal such as a baby, pet, and domestic animal as a reflection and changes from the reflection of the animal's action to an image signal; a comparison arithmetic process which compares with both of an image signal which was input by said acting reflection receiving process and the data for voice which was analysed by the animal behavioralism beforehand, and it outputs the selected data; and an indicational process which indicates the data which were selected by said comparison arithmetic process in a word or a display.

## Claims

1. An animal's intention translational method comprising:
an informational receiving process which receives either of the two or both of a voice that the animal such as a baby, pet, and domestic animal utters or the animal's actions;
a comparison arithmetic process which compares with an informational signal by said informational receiving process and the data which are analysed by the animal behavioralism beforehand, and it selectes either of the data; and
an indicational process which indicates the data which are selected by said comparison arithmetic process in a voice or in letters and pictures on a display that people are able to understand.

2. An animal's intention translational method according to claim 1, wherein an informational signal by said informational receiving process is a voice signal, that the animal utters which is got using a microphone for gathering sounds.

3. An animal's intention translational method according to claim 1, wherein an informational signal by said informational receiving process is an image signal which is received animal's action as a reflection which is got using a video camera.

4. An animal's intention translational method according to claim 1, wherein an informational signal by said informational receiving process is said voice signal, that the animal utters, which is got using said microphone for gathering sounds and said image signal which is received animal's action as a reflection which is got using said video camera.

5. An animal's intention translational method accoding to claim 1, wherein an indication by said indicational process is the selected expression for emotion, will or desire about the animal.

6. An animal's intention translational method according to claim 1, wherein an indication by said indicational process is a corresponding way of what we can do for the animal by said selected expression for emotion, will or desire about the animal.
